# EUROPÄISCHE PATENTSCHRIFT

(11) **EP 1 184 215 B1**
(45) Veröffentlichungstag und Bekanntmachung des Hinweises auf die Patenterteilung: **25.10.2006**
(21) Anmeldenummer: 01121163.8
(22) Anmeldetag: 04.09.2001
(51) Int. Cl.: B60G 17/00, B60G 17/015, B60G 13/00, B60G 15/00

(54) **Aktuator zur aktiven Fahrwerksregelung**
Actuator for active regulation chassis
Actionneur pour le contrôle actif du chassis

(30) Priorität: 04.09.2000 DE 10043711
(43) Veröffentlichungstag der Anmeldung: 06.03.2002
(73) Patentinhaber: HQM Sachsenring GmbH, 08058 Zwickau (DE)
(72) Erfinder: Voy, Christian, Prof. Dr., 29549 Bad Brevensen, OT G (DE); Sammet, Gernot, Dipl.-Ing., 08149 Mülsen St. Nicolas (DE); Freund, Wolfgang, Dr.-Ing., 08428 Langenbernsdorf (DE); Besnault, Vianney, Dipl.-Ing., 08058 Zwickau (DE); Schulze, Jürgen, Dipl.-Ing., 09122 Chemnitz (DE)
(74) Vertreter: Rumrich, Gabriele

(56) Entgegenhaltungen:
- EP-A- 0 843 110
- WO-A-80/01780
- US-A- 4 815 575
- US-A- 5 091 679
- PATENT ABSTRACTS OF JAPAN vol. 016, no. 026 (M-1202), 22. Januar 1992 (1992-01-22) & JP 03 239619 A (KAYABA IND CO LTD), 25. Oktober 1991 (1991-10-25)

## Beschreibung

Die Erfindung betrifft einen Aktuator zur aktiven Fahrwerksregelung, insbesondere zur Kompensation der Wank- und Nickbewegung eines Kraftfahrzeuges.

Es sind zahlreiche Systeme zum Ausgleich der Wank- und Nickbewegung von Fahrzeugen bekannt. Die bisherigen Lösungen beinhalten dabei jeweils ein Bauelement für den Wank- und/oder Nickausgleich, ein Element für die Schwingungsdämpfung sowie ein Element für die Schwingungstilgung

In EP 0 843 110 A1 wird eine höhenveränderliche Abstützung eines Radträgers oder Achskörpers beschrieben. Dabei ist am Aufbau ein hydraulisches Stellglied mit einer schwenkbaren Stellwelle angeordnet, die über ein Gestänge auf den Radträger oder den Achskörper wirkt. Der Hebelarm auf welchen das hydraulische Stellglied wirkt, ist als mechanische Feder gestaltet.

In DE 44 28 605 A1 wird ein Hydrauliksystem für ein aktives Fahrwerk beschrieben, bei welchem Aktuatoren mit jeweils einem Druckspeicher für eine Vorderachse und eine Hinterachse des Fahrzeuges vorgesehen sind, sowie mit einer Pumpe zur Versorgung der Aktuatoren und einem entsprechenden Leitungssystem. Weiterhin ist ein Zusatzdruckspeicher vorgesehen, der bei im Wesentlichen horizontaler Fahrzeugaufbaulage gleichzeitig mit den Aktuatoren einer Fahrzeugachse verbunden und bei Kurvenfahrt von dem kurvenäußeren Aktuator getrennt und mit dem kurveninneren Aktuator verbunden ist. Den Aktuatoren ist eine separate verstellbare Dämpfereinrichtung zugeordnet, die bei Kurvenfahrt für den kurveninneren Aktuator auf eine stärkere Dämpfung eingestellt wird.

DE 196 13 769 A1 beschreibt ein Zweikreishydrauliksystem für eine aktive Fahrwerksregelung zur Unterdrückung der Rollbewegung eines Kraftfahrzeuges (Wankausgleich) mittels eines verstellbaren Stabilisators jeweils an einer Kraftfahrzeugvorderachse und Kraftfahrzeughinterachse. Ein aktives Federungssystem, dessen zwischen gefederter und ungefederter Masse angeordnetes Feder- bzw. Abstützaggregat jeweils ein passives ungesteuertes Federelement sowie ein dazu in Reihe angeordnetes hydraulisches Verdrängeraggregat mit regelbarer Verstellung aufweist, zeigt DE 44 14 022 A1.

Durch Anordnung von Weggebern für die Erfassung der Hubstellung der gefederten Masse relativ zur ungefederten Masse sowie des Hubes des hydraulischen Verdrängeraggregates soll die Möglichkeit geschaffen werden, eine Regelung der Abstützkräfte durchzuführen.

Diese hydraulisch arbeitenden Regelsysteme weisen den Nachteil auf, daß aufgrund der Kompressibilität von Luft eine oft ungenügende Schnelligkeit des Systems zum Ausgleich der Wank- oder Nickbewegungen bzw. bei der Schwingungsdämpfung zu verzeichnen ist.

Es sind weiterhin Aktuatoren in der Form von Schwenkmotoren zum Ausgleich von Wankbewegungen bekannt. Die in DE 197 54 539 A1 beschriebene Lösung weist dabei vorn und hinten geteilte Stabilisatorhälften auf, die durch die Schwenkmotoren verdreht werden. Der Wankausgleich ist dabei lediglich im Bereich der Verdrehsteifigkeit der Stabilisatoren möglich, ein Nickausgleich kann nicht erfolgen.

Aufgabe der Erfindung ist es, einen Aktuator zur aktiven Fahrwerksregelung zu schaffen, welcher insbesondere die Kompensation der Wank- und Nickbewegung und eine Dämpfung der Lenkerschwingungen bewirkt und gleichzeitig als Schwingungstilger einsetzbar ist und bei einer einfachen Bauweise eine schnelle Reduzierung der Aufbaubeschleunigung und der dynamischen Radlastschwankungen gewährleistet.

Diese Aufgabe wird erfindungsgemäß mit den Merkmalen des ersten Patentanspruchs gelöst.

Der Aktuator zur aktiven Fahrwerksregelung, ist mit dem am Rad und am Aufbau des Fahrzeuges befestigten Lenker verbunden und weist ein, ein Drehmoment erzeugenden Stellgliedes in Form eines Schwenkmotors auf, der zwischen Aufbau und Lenker angeordnet ist und ein dem Wank- und Nickausgleich entsprechende und/oder ein die Dämpfung der Lenkerschwankungen gewährleistendes Drehmoment auf den Lenker überträgt, wobei der Schwenkmotor erfindungsgemäß über ein energiespeicherndes Element in Form einer Tilgerfeder mit dem Lenker gekoppelt ist und die Tilgermasse bildet und somit zusätzlich als Tilger wirkt und die Radschwingungen tilgt.

Eine Koppel eines Schwenkhebels eines Schwenkmotors ist dabei mit ihrem einen Ende in einem ersten Drehpunkt drehbeweglich zu verbinden, wobei entweder der Schwenkmotor am Aufbau befestigt und die Koppel an ihrem anderen Ende mit dem Lenker drehbeweglich oder der Schwenkmotor am Lenker befestigt und die Koppel an ihrem anderen Ende mit dem Aufbau in einem zweiten Drehpunkt drehbeweglich verbunden ist, so daß ebenfalls das durch den Schwenkmotor erzeugte Drehmoment auf den Lenker übertragen wird.

Durch eine Drehbewegung des Schwenkmotors wird ein Drehmoment auf den Lenker übertragen und eine Wank- oder Nickbewegung des Fahrzeuges durch Niveauänderung zwischen Lenker und

Aufbau des Fahrzeuges ausgeglichen, und somit die Bewegung der Karosserie so geregelt, daß möglichst ständig ein gleichbleibender Abstand der Karosserie zur Fahrbahn vorhanden ist. Weiterhin kann durch definierte Druckbeaufschlagung (und somit Drehbewegung) des Schwenkmotors entsprechend der Lenkerschwingung ein Drehmoment erzeugt werden, welches diese dämpft und möglichst kompensiert.

In einer bevorzugten Variante ist der Schwenkmotor mit seinem Schwenkhebel und der Koppel mit dem Aufbau verbunden und zwischen dem Schwenkmotor und dem Lenker die Tilgerfeder angeordnet, so daß der Schwenkmotor als Tilgermasse wirkt und über die Tilgerfeder schwingend gelagert ist. Die schwingende Lagerung des Schwenkmotors erfolgt z.B. über wenigstens zwei beidseitig beweglich gelagerte Tilgerarme, wobei der Schwenkmotor über die beidseitig beweglich gelagerten Tilgerarme in Drehpunkten am Lenker befestigt ist. Die Tilgerarme werden dabei im wesentlichen parallel zueinander angeordnet.

Der zweite Drehpunkt der Koppel und die Drehpunkte der Tilgerarme liegen bevorzugt vertikal auf einer gleichen Wirkungsebene.

Anstelle einer Koppel ist es auch möglich, das Drehmoment vom Schwenkmotor auf den Lenker über eine Drehfeder oder einen als Biegefeder ausgebildeten Schwenkhebel zu übertragen.

Vorteilhaft ist es, wenn die Frequenz des aus Tilgerfeder und Tilgermasse in Form des Schwenkmotors bestehenden Tilgers an die sich ändernden fahrdynamischen Einflüsse anpaßbar ist. Dies kann durch Änderung der Tilgermasse und/oder der Federsteifigkeit erfolgen, wobei die Tilgermasse z.B. durch An- oder Abkopplung von Zusatzmassen verändert werden kann. Eine Masseänderung ist auch durch zu- oder ableiten eines Fluids möglich, welches ein hohes spezifisches Gewicht aufweisen sollte.

Die Tilgerfeder kann auch als Luftfeder ausgebildet sein, deren Steifigkeit bei Erhöhung des Luftfederinnendruckes ansteigt, das Volumen der Luftfeder sollte bei Erhöhung des Luftfederinnendruckes im Wesentlichen gleich bleiben.

Um die erforderliche Aufbaufederung zu gewährleisten, sind zwischen Schwenkmotor und Aufbau und/oder zwischen Schwenkmotor und Lenker entsprechend wirkende Federelemente angeordnet. Diese Federelemente können komplett als Aufbaufederung wirken oder auch Teile einer Aufbaufederung ersetzen. Es ist z.B. möglich, diese Federelemente als Drehfedern auszubilden oder als Luft- oder Hydraulikfedern in den Regelkreis des Schwenkmotors zu integrieren.

Mit der Erfindung wird eine einfache elegante Lösung eines Aktuators zur aktiven Fahrwerksregelung geschaffen, welcher sowohl die Kompensation der Wank- und Nickbewegung und/oder eine Dämpfung der Lenkerschwingungen bewirkt. Durch die gleichzeitige Ausbildung als Tilgermasse ist diese Lösung auch als Schwingungstilger einsetzbar und es wird eine schnelle Reduzierung der Aufbaubeschleunigung und der dynamischen Radlastschwankungen gewährleistet.

Die Erfindung wird nachfolgend anhand von Ausführungsbeispielen und zugehörigen Zeichnungen näher erläutert.

Es zeigen:
- Fig. 1:: Schwenkmotor 1 als Tilgermasse mit schwingender Lagerung 5 über Tilgerfeder 7,
- Fig. 2:: Darstellung gem. Fig. 2, jedoch mit in einer horizontalen Ebene angeordneten Drehpunkten D2, D3, D4 der Tilgerarme 8, 9 und der Koppel 4,
- Fig. 3:: Darstellung gem. Fig. 2, jedoch mit beidseitig am Schwenkmotor 1 angeordneten Gelenkarmen 11, 12, die sich am Lenker 5 abstützen.
- Fig. 4:: Draufsicht eines Schwenkmotors 1, der über eine Drehfeder 10 am Lenker 5 angelenkt ist.

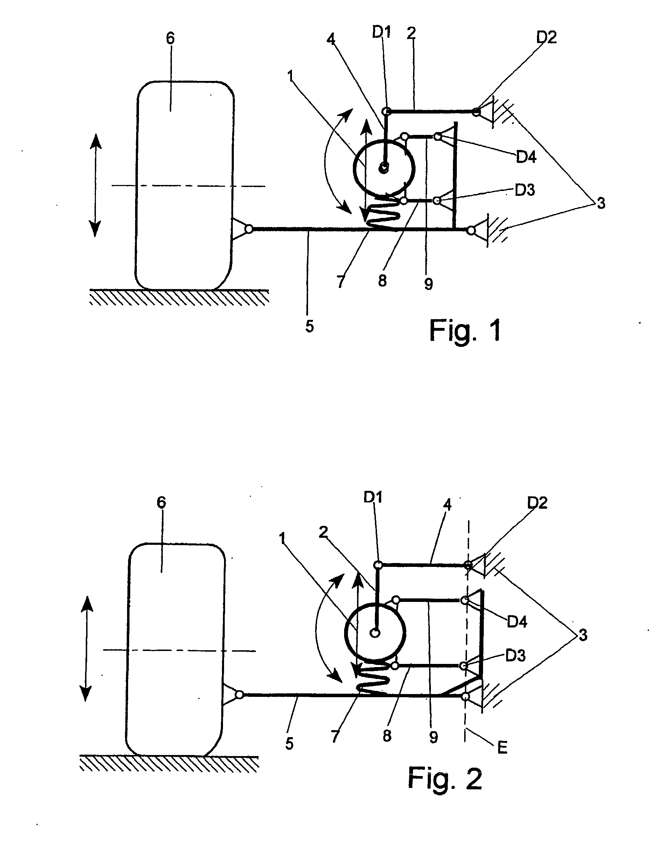

Gem. Fig. 1 ist dargestellt, daß der Schwenkmotor 1 durch eine federnde Lagerung in Verbindung mit einer Tilgerfeder 7 als Tilgermasse wirkt. Dazu ist der Schwenkmotor 1 über ein Gelenkviereck am Lenker 5 befestigt. Der Lenker 5 weist dafür eine vertikale Ausstülpung 5.1 auf. Das Gelenkviereck wird durch zwei übereinander angeordnete im wesentlichen zueinander parallele Tilgerarme 8, 9 gebildet, die sowohl am Schwenkmotor 1 als auch an der Ausstülpung 5.1 des Lenkers 5 (dort in Gelenkpunkten D3, D4) schwenkbar befestigt sind. Zwischen dem Schwenkmotor 1 und dem Lenker 5 ist dabei die Tilgerfeder 7 angeordnet. Der Schwenkarm 2 ist über die Koppel 4 mit dem Aufbau 3 verbunden, wobei die Koppel 4 in Drehpunkt D1 am Schwenkarm 2 und im Drehpunkt D2 am Aufbau 3 beweglich gelagert ist.

Dadurch wird insgesamt eine schwingende Lagerung des Schwenkmotors 1 realisiert, die als Tilger wirkt, wobei gleichzeitig durch Rotation des Schwenkmotors 1 in einem definierten Winkel ein dem Neig- und Nickausgleich entsprechendes und/oder die Dämpfung der Lenkerschwingungen bewirkendes Drehmoment auf den Lenker übertragen werden kann. Die Drehpunkte D3 und D4 der beiden Tilgerarme 8, 9, sind dabei gegenüber dem Drehpunkt D2 der Koppel 4 um die Länge L in Richtung zum Rad 6 versetzt angeordnet.

Eine ähnliche Darstellung, jedoch mit in einer vertikalen Ebene E angeordneten Gelenkpunkten D2, D3, D4, zeigt Fig. 2. Diese Variante gewährleistet besonders gute Eigenschaften des Aktuators.

Neben der Lagerung des Schwenkmotors 1 über zwei parallele, waagerecht angeordnete Tilgerarme kann dieser auch über eine Parallelführung am Lenker schwingend gelagert werden (nicht dargestellt).

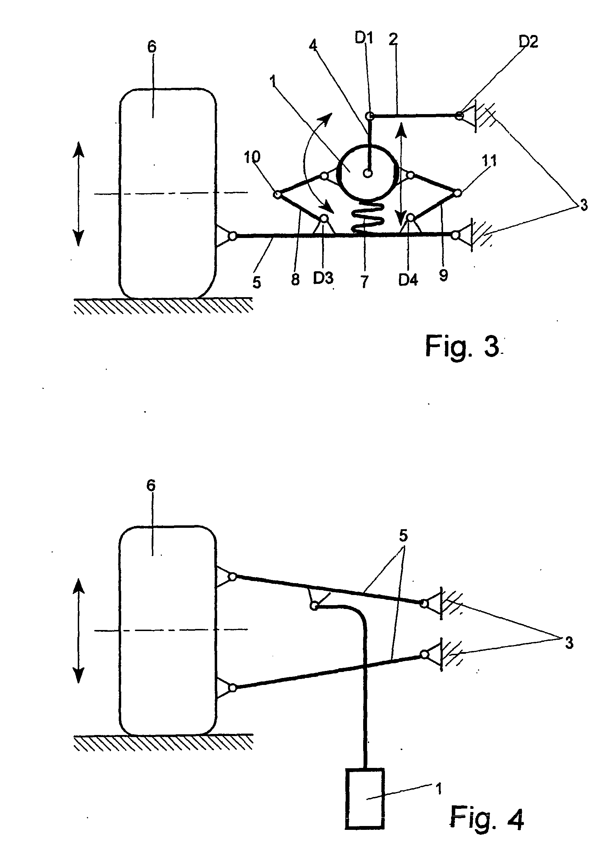

Eine weitere Alternative sind zwei beidseitig am Schwenkmotor 1 vorzugsweise spiegelbildlich befestigte und sich am horizontalen Lenker 5 abstützende Tilgerarme 8, 9 (Fig. 3) mit Knickpunkten 10, 11 die ebenfalls eine schwingende Lagerung des Schwenkmotors 1 bei gleichzeitiger Drehmomentenübertragung gewährleisten.

Eine Variante, bei welcher das Drehmoment vom Schwenkmotor auf den Lenker 5 mittels einer Drehfeder 10 übertragen wird zeigt Fig. 4 in der Draufsicht. Alternativ wäre auch eine Biegefeder zur Übertragung des Drehmomentes möglich.

Mit der erfindungsgemäßen Lösung ist es erstmalig möglich mit einem Aktuator direkt Einfluß auf hochfrequente Radschwingungen zu nehmen und diese zu Tilgen bzw. zu dämpfen und dabei gleichzeitig Wank- und Nickbewegungen auszugleichen.

Weiterhin kann der Aktuator durch eine Veränderung der Kennwerte des Tilgers in Form von Federkennlinie und/oder Tilgermasse erstmalig modifiziert und auf fahrdynamische Kenngrößen (wie z.B. Fahrbahnzustand, Fahrbeschwindigkeit, Beladung) abgestimmt werden.

## Patentansprüche

1. Aktuator zur aktiven Fahrwerksregelung, wobei der Aktuator mit dem am Rad (6) und am Aufbau (3) des Fahrzeuges befestigten Lenker (5) verbunden ist, unter Verwendung eines ein Drehmoment erzeugenden Stellgliedes in Form eines Schwenkmotors, der zwischen Aufbau (3) und Lenker (5) angeordnet ist und ein dem Wank- und Nickausgleich entsprechendes und/oder ein die Dämpfung der Lenkerschwankungen gewährleistendes Drehmoment auf den Lenker (5) überträgt, **dadurch gekennzeichnet, dass** der Schwenkmotor (1) über ein energiespeicherndes Element in Form einer Tilgerfeder (7) mit dem Lenker (5) gekoppelt ist und die Tilgermasse bildet und somit zusätzlich als Tilger wirkt und die Radschwingungen tilgt.

2. Aktuator nach Anspruch 1, **dadurch gekennzeichnet, dass** das Stellglied als Lagerung des Lenkers (5) am Aufbau (3) ausgebildet ist, wobei ein Schwenkhebel (2) des Schwenkmotors (1) den Lenker (5) bildet, so dass das durch den Schwenkmotor (1) erzeugte Drehmoment auf den als Lenker (5) wirkenden Schwenkhebel (2) übertragen wird.

3. Aktuator nach Anspruch 1 oder 2, **dadurch gekennzeichnet, dass** mit dem Schwenkhebel (2) des Schwenkmotors (1) eine Koppel (4) mit ihrem einen Ende in einem Drehpunkt (D1) drehbeweglich verbunden ist, wobei der Schwenkmotor am Lenker (5) befestigt und die Koppel (4) an ihrem anderen Ende mit dem Aufbau (3) in einem Drehpunkt (D2) drehbeweglich verbunden ist, so dass das durch den Schwenkmotor (1) erzeugte Drehmoment auf den Lenker (5) übertragen wird.

4. Aktuator nach einem oder mehreren der Ansprüche 1 bis 3, **dadurch gekennzeichnet, dass** der Schwenkmotor (1) mit seinem Schwenkhebel (2) und der Koppel (4) mit dem Aufbau (3) verbunden ist und dass zwischen dem Schwenkmotor (1) und dem Lenker (5) die Tilgerfeder (7) angeordnet ist, so dass der Schwenkmotor (1) über die Tilgerfeder (7) schwingend gelagert ist.

5. Aktuator nach einem oder mehreren der 1 bis 4, **dadurch gekennzeichnet, dass** der Schwenkmotor (1) über wenigstens zwei beidseitig beweglich gelagerte Tilgerarme (8, 9) schwingend gelagert ist.

6. Aktuator nach einem oder mehreren der Ansprüche 1 bis 5, **dadurch gekennzeichnet, dass** der Schwenkmotor (1) über die beidseitig beweglich gelagerten Tilgerarme (8, 9) in Drehpunkten (D3, D4) am Lenker (5) befestigt ist.

7. Aktuator nach einem oder mehreren der Ansprüche 1 bis 6, **dadurch gekennzeichnet, dass** die Tilgerarme (8, 9) im wesentlichen parallel und/oder spiegelbildlich zueinander angeordnet sind.

8. Aktuator nach einem oder mehreren der Ansprüche 1 bis 7, **dadurch gekennzeichnet, dass** der Drehpunkt (D2) der Koppel (4) und die Drehpunkte (D3, D4) der Tilgerarme (8, 9) auf einer gleichen Wirkungsebene liegen.

9. Aktuator nach Anspruch 8, **dadurch gekennzeichnet, dass** die Drehpunkte (D2, D3, D4) vertikal auf einer gleichen Wirkungsebene liegen.

10. Aktuator nach einem oder mehreren der Ansprüche 1 bis 9, **dadurch gekennzeichnet, dass** der Schwenkmotor (1) über eine Drehfeder (10) oder einen als Biegefeder ausgebildeten Schwenkhebel mit dem Lenker (5) verbunden ist.

11. Aktuator nach einem oder mehreren der Ansprüche 1 bis 10, **dadurch gekennzeichnet, dass** die Frequenz des aus Tilgerfeder (7) und Tilgermasse in Form des Schwenkmotors (1) bestehenden Tilgers an die sich ändernden fahrdynamischen Einflüsse anpaßbar ist.

12. Aktuator nach Anspruch 11, **dadurch gekennzeichnet, dass** die Frequenz durch Änderung der Tilgermasse und/oder der Federsteifigkeit anpaßbar ist.

13. Aktuator nach Anspruch 11 oder 12, **dadurch gekennzeichnet, dass** die Tilgermasse durch An- oder Abkopplung von Zusatzmassen veränderbar ist.

14. Aktuator nach einem oder mehreren der Ansprüche 11 bis 13, **dadurch gekennzeichnet, dass** als Zusatzmasse ein Fluid zu- oder ableitbar ist.

15. Aktuator nach Anspruch 14, **dadurch gekennzeichnet, dass** das Fluid ein hohes spezifisches Gewicht aufweist.

16. Aktuator nach Anspruch 12, **dadurch gekennzeichnet, dass** die Tilgerfeder (7) als Luftfeder ausgebildet ist, deren Steifigkeit bei Erhöhung des Luftfederinnendruckes ansteigt.

17. Aktuator nach Anspruch 16, **dadurch gekennzeichnet, dass** das Volumen der Luftfeder bei Erhöhung des Luftfederinnendruckes im Wesentlichen gleich bleibt.

## Claims

1. An actuator for active undercarriage control, with the actuator being connected with the pull rod (5) fastened to the wheel (6) and the body (3) of the vehicle, by using an actuating element in the form of a swivel motor which generates a torque and which is arranged between body (3) and pull rod (5) and transmits a torque on the pull rod (5) which corresponds to the rolling and pitching compensation and/or ensures the damping of the pull rod fluctuations, **characterized in that** the swivel motor (1) is coupled with the pull rod (5) by means of a power-storing element in the form of a vibration absorber spring (7) and forms the vibration-absorbing mass and thus acts additionally as a vibration absorber and absorbs the wheel vibrations.

2. An actuator according to claim 1, **characterized in that** the actuating element is arranged as the bearing of the pull rod (5) on the body (3), with a swing arm (2) of the swivel motor (1) forming the pull rod (5), so that the torque generated by the swivel motor (1) is transmitted onto the swing arm (2) acting as the pull rod (5).

3. An actuator according to claim 1 or 2, **characterized in that** a coupler (4) is connected in a rotationally movable way with the swing arm (2) of the swivel motor (1) with its one end in a fulcrum (D1), with the swivel motor being fastened to the pull rod (5) and the coupler (4) being connected with the body (3) in a fulcrum (D2) in a rotationally movable way, so that the torque generated by the swivel motor (1) is transmitted onto the pull rod (5).

4. An actuator according to one or several of the claims 1 to 3, **characterized in that** the swivel motor (1) is connected with its swing arm (2) and the coupler (4) with the body and that the vibration absorber spring (7) is arranged between the swivel motor (1) and the pull rod (5), so that the swivel motor (1) is held in a oscillating manner by way of the vibration absorber spring (7).

5. An actuator according to one or several of claims 1 to 4, **characterized in that** the swivel motor (1) is held in an oscillating manner by way of at least two vibration absorber arms (8, 9) which are held on either side in a movable way.

6. An actuator according to one or several of the claims 1 to 5, **characterized in that** the swivel motor (1) is fastened to the pull rod (5) in fulcrums (D3, D4) by way of vibration absorber arms (8, 9) which are held on either side in a movable way.

7. An actuator according to one or several of the claims 1 to 6, **characterized in that** the vibration absorber arms (8, 9) are arranged substantially parallel and/or laterally reversed with respect to each other.

8. An actuator according to one or several of the claims 1 to 7, **characterized in that** the fulcrum (D2) of the coupler (4) and the fulcrums (D3, D4) of the vibration absorber arms (8, 9) lie on the same action plane.

9. An actuator according to claim 8, **characterized in that** the fulcrums (D2, D3, D4) lie vertically on the same action plane.

10. An actuator according to one or several of the claims 1 to 9, **characterized in that** the swivel motor (1) is connected with the pull rod (5) by way of a torsion spring (10) or a swing arm arranged as a spiral spring.

11. An actuator according to one or several of the claims 1 to 10, **characterized in that** the frequency of the vibration absorber consisting of a vibration absorber spring (7) and a vibration absorber mass in the form of the swivel motor (1) can be adjusted to the changing influences of driving dynamics.

12. An actuator according to claim 11, **characterized in that** the frequency can be adjusted by changing the vibration absorber mass and/or the spring constant.

13. An actuator according to claim 11 or 12, **characterized in that** the vibration absorber mass can be changed by coupling or decoupling additional masses.

14. An actuator according to one or several of the claims 11 to 13, **characterized in that** a fluid can be fed or removed as an additional mass.

15. An actuator according to claim 14, **characterized in that** the fluid has a high specific weight.

16. An actuator according to claim 12, **characterized in that** the vibration absorber spring (7) is arranged as a pneumatic spring whose stiffness rises when the internal pressure of the pneumatic spring is increased.

17. An actuator according to claim 16, **characterized in that** the volume of the pneumatic spring remains substantially the same when the internal pressure of the pneumatic spring is increased.

## Revendications

1. Actionneur pour le réglage actif du châssis, l'actionneur étant relié à la bielle directrice (5) fixée à la roue (6) et à la carrosserie (3) du véhicule, utilisant un organe de réglage sous forme de moteur oscillant générateur de couple qui est disposé entre la carrosserie (3) et la bielle directrice (5) et qui transmet à la bielle directrice (5) un couple correspondant à la compensation des mouvements de roulis et de tangage et/ou assurant l'amortissement des oscillations de la bielle directrice, **caractérisé en ce que** le moteur oscillant (1) est couplé à la bielle directrice (5) par l'intermédiaire d'un élément accumulateur d'énergie sous forme d'un ressort amortisseur (7) et forme la masse amortissante, assumant ainsi la fonction supplémentaire d'amortisseur et amortissant les oscillations des roues.

2. Actionneur selon la revendication 1, **caractérisé en ce que** l'organe de réglage est conformé sous forme de support pour le montage de la bielle directrice (5) sur la carrosserie (3), un levier pivotant (2) du moteur oscillant (1) formant la bielle directrice (5) de sorte que le couple généré par le moteur oscillant (1) est transmis au levier pivotant (2) faisant office de bielle directrice (5).

3. Actionneur selon la revendication 1 ou 2, **caractérisé en ce qu'**une bielle (4) est reliée, mobile en rotation autour d'un point de rotation (D1), par une de ses extrémités au levier pivotant (2) du moteur oscillant (1), le moteur oscillant étant fixé sur la bielle directrice (5), et que la bielle (4) est reliée, mobile en rotation autour d'un point de rotation (D2), par son autre extrémité à la carrosserie (3) de sorte que le couple généré par le moteur oscillant (1) est transmis à la bielle directrice (5).

4. Actionneur selon une ou plusieurs des revendications 1 à 3, **caractérisé en ce que** le moteur oscillant (1), avec son levier pivotant (2) et la bielle (4), est relié à la carrosserie (3) et que le ressort amortisseur (7) est interposé entre le moteur oscillant (1) et la bielle directrice (5) de sorte que le moteur oscillant (1) est monté oscillant par le biais du ressort amortisseur (7).

5. Actionneur selon une ou plusieurs des revendications 1 à 4, **caractérisé en ce que** le moteur oscillant (1) est monté oscillant par l'intermédiaire d'au moins deux bras amortisseurs (8, 9) montés mobiles des deux côtés.

6. Actionneur selon une ou plusieurs des revendications 1 à 5, **caractérisé en ce que** le moteur oscillant (1) est fixé sur la bielle directrice (5) en des points de rotation (D3, D4) par l'intermédiaire des bras amortisseurs (8, 9) montés mobiles des deux côtés.

7. Actionneur selon une ou plusieurs des revendications 1 à 6, **caractérisé en ce que** les bras amortisseurs (8, 9) sont disposés sensiblement en parallèle et/ou agencés en miroir l'un par rapport à l'autre.

8. Actionneur selon une ou plusieurs des revendications 1 à 7, **caractérisé en ce que** le point de rotation (D2) de la bielle (4) et les points de rotation (D3, D4) des bras amortisseurs (8, 9) se situent sur un même plan d'action.

9. Actionneur selon la revendication 8, **caractérisé en ce que** les points de rotation (D2, D3, D4) se situent verticalement sur un même plan d'action.

10. Actionneur selon une ou plusieurs des revendications 1 à 9, **caractérisé en ce que** le moteur oscillant (1) est relié à la bielle directrice (5) par l'intermédiaire d'un ressort de torsion (10) ou d'un levier pivotant conformé en forme de ressort de flexion.

11. Actionneur selon une ou plusieurs des revendications 1 à 10, **caractérisé en ce que** la fréquence de l'amortisseur constitué du ressort amortisseur (7) et de la masse amortissante sous forme du moteur oscillant (1) est adaptable aux variations des influences exercées par le comportement dynamique du véhicule.

12. Actionneur selon la revendication 11, **caractérisé en ce que** la fréquence est adaptable en modifiant la masse amortissante et/ou la rigidité du ressort.

13. Actionneur selon la revendication 11 ou 12, **caractérisé en ce que** la masse amortissante est modifiable par le couplage ou le découplage de masses supplémentaires.

14. Actionneur selon une ou plusieurs des revendications 11 à 13, **caractérisé en ce qu'**un fluide faisant office de masse supplémentaire est apte à être amené ou évacué.

15. Actionneur selon la revendication 14, **caractérisé en ce que** le fluide a un poids spécifique élevé.

16. Actionneur selon la revendication 12, **caractérisé en ce que** le ressort amortisseur (7) est conformé en forme de ressort à air dont la rigidité augmente avec l'augmentation de la pression interne du ressort à air.

17. Actionneur selon la revendication 16, **caractérisé en ce que** le volume du ressort à air reste sensiblement le même lorsque la pression interne du ressort augmente.
